# EUROPEAN PATENT APPLICATION

(11) **EP 2 692 809 A1**
(43) Date of publication of application: **05.02.2014**
(21) Application number: 13178636.0
(22) Date of filing: 30.07.2013
(51) Int. Cl.: C09J 5/06, C09J 7/02, G09F 3/10

(54) **Pressure-sensitive adhesive label and label issuing device**

(30) Priority: 30.07.2012 JP 2012168798
(71) Applicant: Seiko Instruments Inc., Chiba-shi, Chiba (JP)
(72) Inventor: Tani, Kazuo, Chiba-shi, Chiba (JP); Sato, Yoshinori, Chiba-shi, Chiba (JP)
(74) Representative: Miller Sturt Kenyon

(57) **Abstract**

A pressure-sensitive adhesive label including: a support layer; a pressure-sensitive adhesive layer disposed on the support layer; a function layer disposed on the pressure-sensitive adhesive layer; and a release layer disposed on the function layer, wherein the function layer is configured to be opened by heating to expose the pressure-sensitive adhesive layer. In this manner, by providing the release layer as the uppermost layer, the pressure-sensitive adhesive label can be prevented from adhering onto the thermal head, that is, the sticking can be prevented, and hence the position and shape of the opening of the function layer can be accurately controlled.

## Description

### BACKGROUND OF THE INVENTION

### 1. Field of the Invention

The present invention relates to a pressure-sensitive adhesive label that has non-pressure-sensitive adhesiveness at a time of storage and is allowed to exhibit pressure-sensitive adhesiveness at a time of use.

### 2. Description of the Related Art

In recent years, pressure-sensitive adhesive labels have been used for a price indication label, a product indication label, an advertisement label, a seal label for a package, and the like. The pressure-sensitive adhesive label is formed of a base including an indication recording layer, a pressure-sensitive adhesive layer, and release paper. When the pressure-sensitive adhesive label is adhered to an adherend, the release paper is peeled, and the pressure-sensitive adhesive label is adhered to the adherend via the exposed pressure-sensitive adhesive layer. A typical pressure-sensitive adhesive label is formed by adhering a band-shape release paper to a pressure-sensitive adhesive layer formed by coating the entire reverse surface of a band-shaped base with a pressure-sensitive adhesive, and stamping out the resultant pressure-sensitive adhesive layer. Therefore, when release paper is peeled and a pressure-sensitive adhesive label is adhered to an adherend, the pressure-sensitive adhesive label is adhered to the adherend over the entire reverse surface of the pressure-sensitive adhesive label. However, depending on applications, there may be the case in which it is necessary to adhere a pressure-sensitive adhesive label to an adherend while partially sealing the pressure-sensitive adhesive strength of the pressure-sensitive adhesive label, instead of adhering the pressure-sensitive adhesive label to the adherend over the entire reverse surface of the pressure-sensitive adhesive label. Further, the release paper peeled off at a time of using the pressure-sensitive adhesive label is discarded without being re-used. Therefore, an environmental load cannot be reduced.

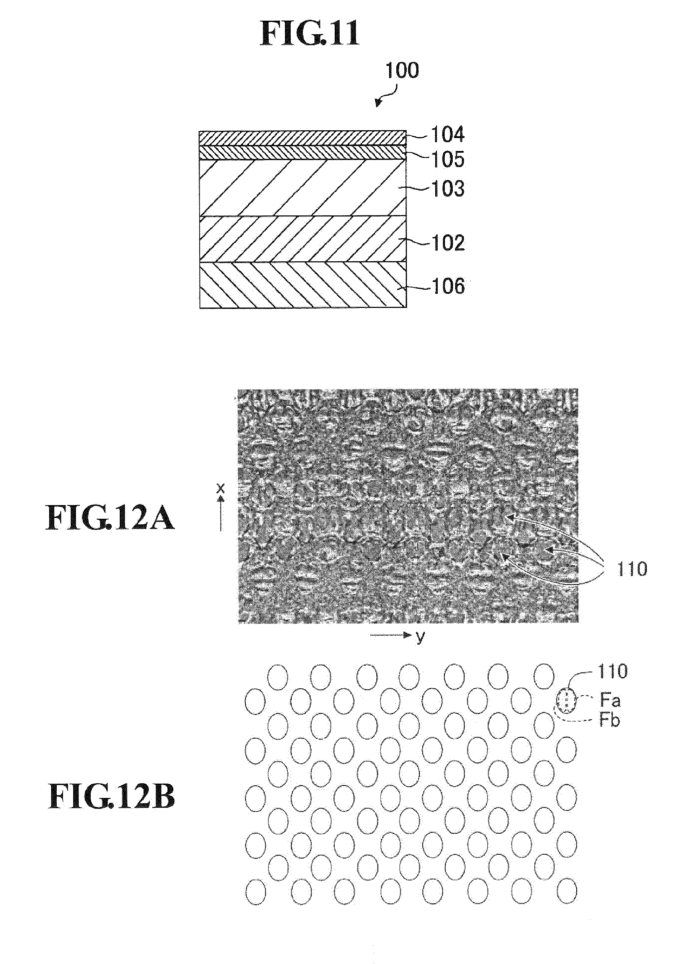

For improvement of the conventionally used pressure-sensitive adhesive label, there has been proposed a pressure-sensitive adhesive label that is allowed to exhibit pressure-sensitive adhesiveness only in a necessary part without using any release paper. FIG. 11 illustrates a cross-sectional view of a pressure-sensitive adhesive label 100 of this type. The pressure-sensitive adhesive label 100 includes a support member 102, a pressure-sensitive adhesive layer 103 having pressure-sensitive adhesiveness that is formed on one surface of the support member 102, a low pressure-sensitive adhesive layer 105 formed on a surface of the pressure-sensitive adhesive layer 103, a thermal reactive layer 104 that is formed on a surface of the low pressure-sensitive adhesive layer 105 and is opened by heating, and a printing layer 106 that is formed on the other surface of the support member 102 and records a character or graphic thereon. The pressure-sensitive adhesive label 100 exhibits pressure-sensitive adhesiveness in a manner that the thermal reactive layer 104 is heated and opened by heating means such as a thermal head to expose the underlying low pressure-sensitive adhesive layer 105 or the underlying pressure-sensitive adhesive layer 103. The low pressure-sensitive adhesive layer 105 is provided for improving the opening accuracy of the thermal reactive layer 104. Therefore, the region to exhibit pressure-sensitive adhesiveness can be arbitrarily set depending on the application of the pressure-sensitive adhesive label 100 or the properties of an adherend. Further, the pressure-sensitive adhesive label 100 has an advantage that an environmental load can be reduced because no release paper is necessary.

The pressure-sensitive adhesive label 100 of this type exhibits pressure-sensitive adhesiveness in a manner that the thermal reactive layer 104 is heated and opened by the thermal head or the like to expose the low pressure-sensitive adhesive layer 105 or the pressure-sensitive adhesive layer 103. Specifically, the pressure-sensitive adhesive label 100 is brought into contact with heat generating parts of the thermal head so that the thermal reactive layer 104 of the pressure-sensitive adhesive label 100 is selectively heated and melted to be opened, and thereafter the pressure-sensitive adhesive label 100 is relatively moved with respect to the thermal head. However, when the thermal reactive layer 104 of the pressure-sensitive adhesive label 100 is selectively heated and melted, there may occur a phenomenon that the thermal reactive layer 104 is stuck onto the heat generating part of the thermal head, and the thermal reactive layer 104 stuck onto the heat generating part is dragged along with the movement of the pressure-sensitive adhesive label 100 and is peeled off from the heat generating part. This phenomenon is called "sticking". If sticking occurs, the thermal reactive layer 104 is irregularly fed to deviate the position of an opening or deform the shape of the opening, and hence a necessary opening pattern cannot be obtained. It is therefore difficult to form desired pressure-sensitive adhesive strength and a desired pressure-sensitive adhesive region.

FIGS. 12A and 12B are views illustrating a conventional pressure-sensitive adhesive label in which the sticking has occurred. FIG. 12A is a photograph of a pressure-sensitive adhesive surface of the pressure-sensitive adhesive label in which the sticking has occurred. FIG. 12B illustrates a desired opening pattern for forming openings in the thermal reactive layer by the selective heating of the heat generating parts of the thermal head. The desired opening pattern is a checkered pattern. One dot of the heat generating part includes two heat generating elements. Two openings Fa and Fb constitute one dot (one opening 110). As shown in FIG. 12A, the openings 110 are formed in the thermal reactive layer, and the underlying pressure-sensitive adhesive layer is exposed. The openings 110 are regularly formed in the y direction in which the heat generating parts of the thermal head are arranged, but have an irregular pattern in the x direction that is a feed direction of the pressure-sensitive adhesive label. Further, two openings are not formed in one opening 110 where two openings are supposed to be formed, and the openings 110 do not have a constant opening shape.

As described above, if the sticking occurs, a desired opening pattern cannot be formed and the shapes of the openings 110 become non-uniform, which makes it difficult to precisely control the position of the opening region and the pressure-sensitive adhesiveness. In addition, if the thermal reactive layer of the pressure-sensitive adhesive label is torn off, the thermal reactive layer adheres onto the surface of the thermal head or the pressure-sensitive adhesive label, with the result that the device or the pressure-sensitive adhesive label is contaminated to significantly reduce the durability.

One conceivable method for preventing the sticking is to coat the heat generating part of the thermal head with a release agent. However, the pressure-sensitive adhesive label runs on the surface of the heat generating part while in contact therewith, and hence the coated release agent is subject to abrasion. It is therefore difficult to prevent thermal welding between the thermal head and the pressure-sensitive adhesive label for a long period of time.

### SUMMARY OF THE INVENTION

Therefore, in this technical field, demands have been made for a pressure-sensitive adhesive label that is free from sticking, specifically, that is capable of preventing a thermal reactive layer from sticking to a heat generating part of a thermal head even after long-term use, and a label issuing device for issuing the pressure-sensitive adhesive label.

A pressure-sensitive adhesive label according to one embodiment of the present invention includes: a support layer; a pressure-sensitive adhesive layer disposed on the support layer; a function layer disposed on the pressure-sensitive adhesive layer; and a release layer disposed on the function layer, in which the function layer is configured to be opened by heating to expose the pressure-sensitive adhesive layer.

Further, the release layer includes a silicone compound.

Further, the release layer includes a silane coupling agent.

Further, the release layer includes a fluorine-based compound.

Further, the release layer has a thickness of from 0.005 µm to 3 µm.

Further, the support layer, the pressure-sensitive adhesive layer, the function layer, or the release layer includes an antistatic agent.

Further, the function layer is formed of an olefin-based resin.

Further, the function layer has an average thickness of from 0.1 µm to 10 µm.

Further, the function layer has a melting point of from 50°C to 280°C.

Further, the function layer includes an inorganic filler.

Further, the function layer is formed of a porous layer.

Further, the porous layer has a void content of from 30% to 85%.

Further, the function layer is formed by laminating a first thermoplastic resin and a second thermoplastic resin, which are incompatible to each other.

Further, the surface of the release layer has a center line average roughness of from 0.05 µm to 0.1 µm.

Further, the opening formed by heating the function layer has a diameter of 40 µm or more.

Further, the pressure-sensitive adhesive layer has a thickness of from 20 µm to 300 µm.

Further, the support layer and the pressure-sensitive adhesive layer include a buffer member therebetween.

Further, the support layer is formed of paper or a polyolefin-based polymer.

Further, the paper includes any one of glassine paper, high-quality paper, art paper, design paper, Japanese paper, a non-woven fabric, and a synthetic resin.

Further, the support layer serves as an indication layer.

Further, the pressure-sensitive adhesive label further includes a thermosensitive color-developing layer disposed on a side of the support layer opposite to the pressure-sensitive adhesive layer.

Further, the pressure-sensitive adhesive label has pressure-sensitive adhesive strength with respect to an adherend of 0.3 N/(50 mm width) to 20 N/(50 mm width).

A label issuing device according to one embodiment of the present invention includes: a conveying part for conveying a pressure-sensitive adhesive label, the pressure-sensitive adhesive label including: a support layer; a pressure-sensitive adhesive layer disposed on the support layer; a function layer disposed on the pressure-sensitive adhesive layer, and a release layer disposed on the function layer; a heat generating part for heating the function layer to form an opening to expose the pressure-sensitive adhesive layer; and a control part for controlling the conveying part and the heat generating part.

Further, the pressure-sensitive adhesive label further includes one of an indication layer provided on a side of the support layer opposite to the pressure-sensitive adhesive layer, and an indication layer corresponding to the support layer. The heat generating part heats the indication layer to perform recording.

As described above, the pressure-sensitive adhesive label according to one embodiment of the present invention includes: the support layer; the pressure-sensitive adhesive layer disposed on the support layer; the function layer disposed on the pressure-sensitive adhesive layer; and the release layer disposed on the function layer. In this case, the function layer is opened by heating to expose the pressure-sensitive adhesive layer. In this manner, by providing the release layer as the uppermost layer, the pressure-sensitive adhesive label can be prevented from adhering onto the thermal head, that is, the sticking can be prevented, and hence the position and shape of the opening of the function layer can be accurately controlled. Consequently, desired pressure-sensitive adhesiveness can be exhibited. Besides, the device contamination due to the adhesion of the pressure-sensitive adhesive layer or the function layer can be prevented.

### BRIEF DESCRIPTION OF THE DRAWINGS

Embodiments of the present invention will now be described by way of further example only and with reference to the accompanying drawings, in which:
FIG. 1 is a schematic cross-sectional view of a pressure-sensitive adhesive label according to a first embodiment of the present invention;
FIGS. 2A, 2B, and 2C are views illustrating how to exhibit pressure-sensitive adhesiveness in the pressure-sensitive adhesive label according to the first embodiment of the present invention;
FIG. 3 is a photograph showing a state in which openings are formed in a function layer of the pressure-sensitive adhesive label according to the first embodiment of the present invention in a checkered pattern by a thermal head;
FIG. 4 is a schematic cross-sectional view of a pressure-sensitive adhesive label according to a second embodiment of the present invention;
FIG. 5 is a schematic cross-sectional view of a pressure-sensitive adhesive label according to a third embodiment of the present invention;
FIG. 6 is a schematic cross-sectional view of a pressure-sensitive adhesive label according to a fourth embodiment of the present invention;
FIG. 7 is a schematic cross-sectional view of a pressure-sensitive adhesive label according to a fifth embodiment of the present invention;
FIG. 8 is a schematic cross-sectional view of a pressure-sensitive adhesive label according to a sixth embodiment of the present invention;
FIG. 9 is a schematic structural view of a label issuing device according to a seventh embodiment of the present invention;
FIG. 10 is a schematic structural view of a label issuing device according to an eighth embodiment of the present invention;
FIG. 11 is a view illustrating a laminate structure of a conventional pressure-sensitive adhesive label; and
FIGS. 12A and 12B are views illustrating a conventionally known pressure-sensitive adhesive label in which sticking has occurred.

### DETAILED DESCRIPTION OF THE PREFERRED EMBODIMENTS

### Pressure-sensitive Adhesive Label

### First Embodiment

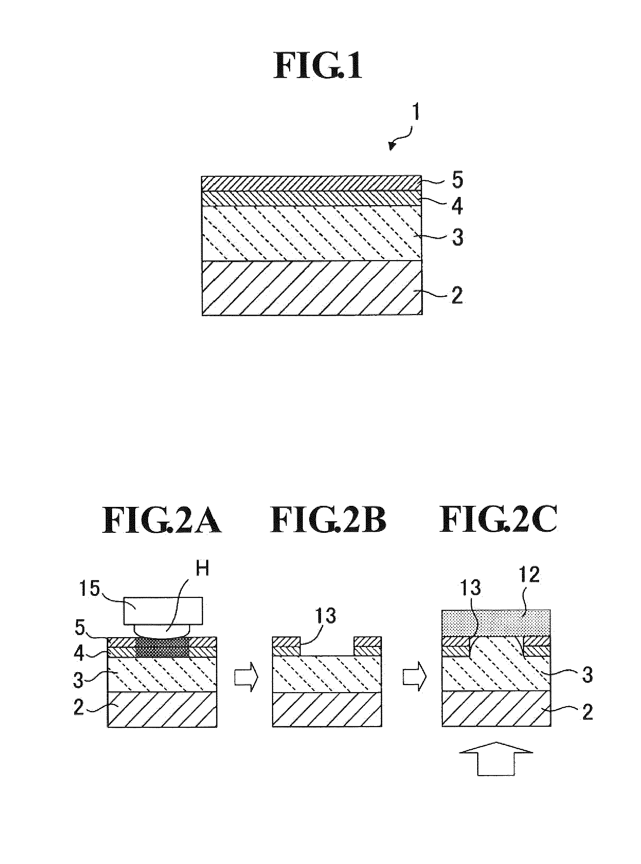

FIG. 1 is a schematic cross-sectional view of a pressure-sensitive adhesive label 1 according to a first embodiment of the present invention. As illustrated in FIG. 1, the pressure-sensitive adhesive label 1 includes a support layer 2, a pressure-sensitive adhesive layer 3 disposed on the support layer 2, a function layer 4 disposed on the pressure-sensitive adhesive layer 3, and a release layer 5 disposed on the function layer 4. The support layer 2 supports the pressure-sensitive adhesive layer 3 disposed thereon and the like. The pressure-sensitive adhesive layer 3 allows the pressure-sensitive adhesive label 1 to adhere onto an adherend. By heating, the function layer 4 is opened to expose the pressure-sensitive adhesive layer 3. The release layer 5 contains a release agent and is provided for preventing sticking.

FIGS. 2A to 2C are views illustrating how to exhibit pressure-sensitive adhesiveness in the pressure-sensitive adhesive label 1 according to the first embodiment of the present invention. A thermal head 15 is used as heating means. As illustrated in FIG. 2A, a heat generating part H of the thermal head 15 is brought into contact with the release layer 5 of the pressure-sensitive adhesive label 1 and causes the heat generating part H to generate heat. Then, as illustrated in FIG. 2B, the heated function layer 4 is melted and shrinks along with the release layer 5, and an opening 13 is formed to expose the pressure-sensitive adhesive layer 3. Next, as illustrated in FIG. 2C, when the pressure-sensitive adhesive label 1 is placed so that the opening 13 side is placed on an adherend 12 and relatively pressed from the support layer 2 side, a pressure-sensitive adhesive contained in the pressure-sensitive adhesive layer 3 adheres under pressure to the adherend 12 through the opening 13.

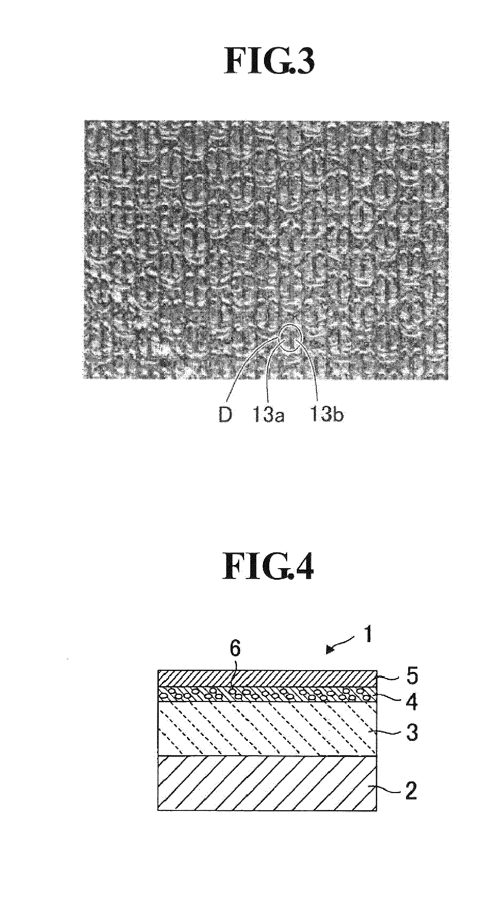

FIG. 3 is a photograph showing a state in which the openings 13 are formed in the function layer 4 of the pressure-sensitive adhesive label 1 according to the first embodiment of the present invention in a checkered pattern by the thermal head 15. Two heat generating elements are included in one dot of the heat generating part H, and hence two openings 13a and 13b are formed in one dot D. It is understood from FIG. 3 that the openings 13a and 13b are formed at intended positions to have substantially the same opening shape.

In this manner, by controlling the heat generating parts H of the thermal head 15, the size, position, number, and the like of the openings 13 to be formed in the function layer 4 can be arbitrarily set, and hence the pressure-sensitive adhesive region and the pressure-sensitive adhesive strength can be set depending on the purpose of use or surface properties of the adherend 12. As a precondition, the openings 13 need to be formed in the function layer 4 at intended positions. Thus, the release layer 5 is provided as the uppermost layer of the pressure-sensitive adhesive label 1 so as to prevent the pressure-sensitive adhesive label 1 from adhering onto the thermal head 15, that is, to prevent the sticking, and the positions and shapes of the openings 13 are accurately controlled so as to exhibit desired pressure-sensitive adhesiveness. Further, the contamination of a label issuing device caused by the adhesion of the pressure-sensitive adhesive label 1 onto the device can also be prevented. Specific descriptions are given below.

### Release Layer

The release layer 5 may be formed on the entire surface of the underlying function layer 4, or may be formed on a necessary part of the surface thereof. The release layer 5 may be formed by adding a release agent in a resin, or may be formed by dissolving or dispersing a release agent in a solvent and coating the underlying function layer 4 with the dispersion liquid, followed by drying. The release layer 5 is formed to have a smooth surface so as to ensure running performance of the pressure-sensitive adhesive label 1.

For the release layer 5, for example, a release agent made of one or at least two kinds selected from the group consisting of a silicone compound, a fluorine-based compound, a wax-based release agent, and an activator-based release agent, or a silicone phosphate ester can be used. Available examples of the wax-based release agent include a release agent whose main component is a mixture of petroleum, plant, and oily substances that are to be dissolved, emulsified, or suspended in water. The main component as used herein means that the weight ratio of the petroleum, plant, or oily substance in the mixture is 50 wt% or more, preferably 60 wt% or more.

As the release agent, solid waxes, fluorine-based or phosphate ester-based surfactants, or silicone oils can be used. Available examples of the solid wax include polyethylene wax, amide wax, and tetrafluoroethylene powder. As the silicone oil, an oily type can be used but a curable type is preferred. Examples of the curable silicone oil include reaction-curable, photocurable, catalyst-curable silicone oils, and the reaction-curable silicone oils are particularly preferred. In the case where such curable silicone oils are used as the release agent, as compared to the case where the above-mentioned surfactant-based release agent is used, the film surface can be avoided from being sticky or dust can be prevented from adhering thereon. The rough additive amount of the curable silicone oils in the resin is 0.5 wt% to 40 wt% with respect to the resin weight. When the additive amount is less than 0.5 wt%, a sufficient releasing effect cannot be obtained. When the additive amount is more than 40 wt%, the sensitivity of the opening mechanism may be reduced. The reaction-curable silicone oil is preferably obtained in a manner that an amino-modified silicone oil and an epoxy-modified silicone oil are reacted and cured. In the case where the release layer 5 is formed by coating, the thickness of the release layer 5 is set to be 0.005 µm to 3 µm, preferably 0.01 µm to 1 µm. When the thickness of the release layer 5 is less than 0.005 µm, a sufficient releasing effect cannot be obtained. When the thickness of the release layer 5 is more than 3 µm, the opening sensitivity of the film is reduced, which is not preferred. In other words, in order to prevent the sticking by forming the release agent on the heat generating part of the thermal head, it is necessary to form the release agent to be thick in consideration of abrasion by the pressure-sensitive adhesive label 1, but, when the release agent is formed to be thick, the heat conductivity is reduced to hinder the opening of the function layer 4. On the other hand, by forming the release layer 5 on the pressure-sensitive adhesive label 1 side as in the present invention, the release layer 5 can be formed extremely thin, which eliminates the factor of hindering the opening of the function layer 4.

The formation of the release layer 5 is not limited to a specific method. For example, the release layer 5 may be formed in a manner that a component containing a release agent is dispersed or dissolved in an arbitrary solvent at a concentration of 1 wt% or less, followed by coating with the use of a roll coater, a gravure coater, a micro gravure coater, a reverse coater, a bar coater, or the like and then evaporating the solvent. The coating amount of the release layer 5 is set to be 0.001 g/m² to 0.5 g/m², preferably about 0.01 g/m² to about 0.05 g/m², in order not to hinder the mechanism of forming the opening by thermal fusion of the film using the thermal head and to obtain sufficient release properties.

The coating of the release agent may be performed at any stage before and after stretching of a film serving as an underlying layer. As a method of controlling the wettability of the underlying film at the time of the coating of the release agent, a silane coupling agent may be used to excite a functional group of the coated surface, or corona discharge treatment may be performed on the coated surface. Note that, the release layer 5 according to the present invention is excellent in environmental resistance, and hence the roll can be kept in better conditions to maintain the quality of the pressure-sensitive adhesive label 1 for a long period of time. Further, the release layer 5 may contain a binder resin, a thermofusible resin, or the like as appropriate as long as the object of the present invention is not hindered. For example, a heat-resistance material, an antioxidant, a surfactant, an antiseptic, a defoamant, or the like may be added.

### Support Layer

As illustrated in FIG. 2C, it is preferred that the support layer 2 be made of a material capable of enlarging a contact area between the pressure-sensitive adhesive layer 3 and the adherend 12 when pressure is applied from the support layer 2 side. Further, it is preferred that the support layer 2 be made of a material capable of maintaining the contact area for a long period of time. When a material having large stiffness is used as the support layer 2, the pressure-sensitive adhesive layer 3 does not easily come into contact with the surface of the adherend 12 through the opening 13, and the pressure-sensitive adhesive layer 3 peels off from the surface of the adherend 12 due to the stiffness of the support layer 2 after the contact, with the result that predetermined pressure-sensitive adhesive strength cannot be maintained. Thus, one of paper and a polyolefin-based polymer having small stiffness is used as the support layer 2.

Examples of the paper to be used as the support layer 2 include glassine paper, high-quality paper, art paper, design paper, Japanese paper, a non-woven fabric, a synthetic resin, recycled paper, coated paper, fine coated paper, cast coated paper, and paper board. It is preferred that the high-quality paper contain, as its main components, wooden pulp such as hardwood pulp (NBKP) and softwood pulp (LBKP), and a plant material such as straw, bagasse, and hemp, and be not coated with pigment coating. It is preferred that the high-quality paper be, of those which are classified as printing information sheets in "Grade Classification Table of Paper and Paper Board" (published by Japan Paper Association) described in "Paper and Paper Board Statistical Chronology", those which are classified as non-coated printing sheets and those which correspond to continuous forms, PPC sheets, and the like classified as information sheets. It is preferred that the recycled paper be, of those which are classified as the above-mentioned high-quality paper, those which use a recycled waste-paper material.

The art paper and the coated paper are those which are classified as coated printing sheets in the above-mentioned "Grade Classification Table of Paper and Paper Board" and include those which are classified as lightweight coated paper. The fine coated paper includes those which are classified as fine coated printing sheets 1 to 3 in the above-mentioned "Grade Classification Table of Paper and Paper Board". The design paper includes fancy paper, embossed paper, and the like classified as special printing sheets and other coating printing sheets.

The cast coated paper is cast coated paper classified as other printing sheets in the above-mentioned "Grade Classification Table of Paper and Paper Board", and is excellent in smoothness and used for advanced printing applications. The paper board is those which are classified as cardboard base paper and packaging paper board in the above-mentioned "Grade Classification Table of Paper and Paper Board". The Japanese paper includes not only hand-made paper using a plant material such as paper mulberry and Edgeworthia chrysantha but also paper machine Japanese paper and the like imitating the hand-made paper. The non-woven fabric includes those which are formed into a sheet shape without using water as well. The synthetic paper is those which are formed into a sheet shape by subjecting a synthetic resin material to axial stretching or the like.

Which of the above-mentioned materials is used as the support layer 2 is determined considering label applications and indication recording contents. For example, in the case where the pressure-sensitive adhesive label 1 is used for adhesion to various food wrapping labels and catalogues, posters, and the like, coated paper such as coated paper, art paper, and cast coated paper is preferred as the support layer 2. Further, in the case where the pressure-sensitive adhesive label 1 is used for special labels, design paper, a non-woven fabric, a synthetic paper, a paper board, or the like is suitable as the support layer 2. Further, in the case of mainly printing characters or bar codes on the support layer 2 or the indication layer disposed on the side of the support layer 2 opposite to the pressure-sensitive layer 3, fine coated paper and high-quality paper are preferred as the support layer 2 and the indication layer.

As the support layer 2, a polyolefin-based polymer can be used. The polyolefin-based polymer uses a resin derived from a plant excellent in environment suitability, and has small low-temperature shrinking properties, soft body and natural shrinkage ratio, excellent rupture resistance, stiffness, and shrinking finish properties, and characteristics for suppressing natural shrinking and inter-layer peeling. Note that, these examples are merely given for illustrative purposes, and any material can be used as the support layer 2 as long as pressure-sensitive adhesive strength can be easily exhibited. That is, the support layer 2 only needs to be appropriately adjusted depending on the application.

### Adhesive Layer

As the pressure-sensitive adhesive layer 3, a pressure-sensitive adhesive can be used. The pressure-sensitive adhesive can exhibit adhesiveness simply by the application of a small pressure at room temperature without using water, solvent, heat, or the like. In addition, the pressure-sensitive adhesive has cohesive strength with elasticity and exhibits high adhesiveness, and can be peeled off even from a hard smooth surface. Specifically, a silicone-based pressure-sensitive adhesive, a rubber-based pressure-sensitive adhesive, and an acryl pressure-sensitive adhesive can be used depending on the application. The silicone-based pressure-sensitive adhesive includes silicone having high cohesive strength or silicone having high pressure-sensitive adhesive strength. The rubber-based pressure-sensitive adhesive includes natural rubber, styrene-butadiene rubber (SBR), polyisobutylene, and other such rubber-based materials. The acryl pressure-sensitive adhesive includes a cross-linked material using monomers having a low glass transition point and a cross-linking material, and a non-cross-linked material obtained by co-polymerizing a monomer having a low glass transition point and a monomer having a high glass transition point.

### Function Layer

It is preferred that the function layer 4 be made of a material with good controllability and capable of forming the opening 13 to have a predetermined opening diameter when the function layer 4 is applied with heat. As the function layer 4, an olefin-based resin or an engineering plastic can be used. The olefin-based resin is used for many purposes as a general-purpose resin, and hence, can form the function layer 4 at low cost. As the olefin-based resin, for example, polyethylene (PE), polyvinyl chloride (PVC), polypropylene (PP), a multi-layer polyolefin-based resin in which PE and PP are stacked, polystyrene (PS), polyester, polyethylene terephthalate (PET), a copolymer of ethylene terephthalate and ethylene isophthalate, and a copolymer of hexamethylene terephthalate and cyclohexanedimethylene terephthalate can be used. In order to improve opening sensitivity, for example, a copolymer of ethylene terephthalate and ethylene isophthalate, and a copolymer of hexamethylene terephthalate and cyclohexanedimethylene terephthalate are particularly preferred.

As the olefin-based resin, for example, a homopolymer, a copolymer, or a multistage polymer can be used. Polyolefins selected from the group consisting of the homopolymer, the copolymer, and the multistage polymer can each be used alone, or can be used as a mixture. Typical examples of the above-mentioned polymers include low-density polyethylene, linear low-density polyethylene, medium-density polyethylene, high-density polyethylene, ultrahigh molecular weight polyethylene, isotactic polypropylene, atactic polypropylene, polybutene, and ethylene propylene rubber.

Further, as the function layer 4, a hybrid that is a stack type of PS and PET, an ethylene/vinyl acetate copolymer (EVA)-based resin, a polyvinyl alcohol (PVA)-based resin, a polylactic acid (PLA)-based resin that is a plant-based material, and the like can be used. Further, a cellulose-based material that can be expected to lower the cost can be used. It is preferred to select a material whose contact angle with the pressure-sensitive adhesive layer 3 to be adjacent to the function layer 4 increases during heating. Further, a uniaxially stretched or biaxially stretched material which uses a stretching process can be used for forming the function layer 4. In the case of using a stretched film, there can be used a material which is stabilized chemically and mechanically by manipulating a glass transition point by copolymerizing a single monomer with another monomer or blending different kinds of components such as rubber. Co-stretching may be uniaxial stretching or biaxial stretching, but biaxial stretching is preferred in terms of film orientation, uniform dispersibility, molecule arrangement, or mechanical strength. Biaxial stretching may be sequential biaxial stretching or simultaneous biaxial stretching. In the case of biaxial stretching, in general, the material is stretched in the vertical direction and in the horizontal direction in this order, but may be stretched in the reverse order. The stretch ratio is not particularly limited, but is determined depending on, for example, the sensitivity required for the material or film to be used. Appropriate vertical and horizontal stretch ratios are preferably 2 to 10, more preferably 3 to 8. Further, after the biaxial stretching is performed, the material may be again stretched in the vertical or horizontal direction or in the vertical and horizontal directions. As the function layer 4 is formed thinner, the function layer 4 has a smaller heat capacity and a higher sensitivity.

The viscosity average molecular weight of the olefin-based resin is preferably 50,000 to 12,000,000, more preferably 50,000 to less than 2,000,000, most preferably 100,000 to less than 1,000,000. If the viscosity average molecular weight is 50,000 or more, the melt-tension at a time of melt molding becomes large to enhance moldability, which provides sufficient entanglement and tends to give high strength. If the viscosity average molecular weight is 12,000,000 or less, particularly, thickness stability is excellent.

It is preferred that the function layer 4 have a small heat capacity. More specifically, in the case where the heat capacity of the function layer 4 is smaller than that of the pressure-sensitive adhesive layer 3, when the function layer 4 is heated, the rise in temperature and melting of the function layer 4 are facilitated, and the pressure-sensitive adhesive layer 3 can be prevented from being deformed or denatured due to heat. In this case, it is desired that the average thickness of the function layer 4 be 0.1 µm to 10 µm. When the thickness of the function layer 4 is less than 0.1 µm, the coating property of the adhesive layer 3 is reduced. When the thickness of the function layer 4 is more than 10 µm, the heat conductivity is reduced and the opening diameter of the opening is decreased. In the case where a polyester film is used as the function layer 4, the thickness is preferably set to be 0.1 µm to 5 µm. When the thickness is 5 µm or less, the opening property is excellent. When the thickness is 0.1 µm or more, the film can be stably formed. Further, the melting point of the function layer 4 is set in the range of from 50°C to 280°C, preferably in the range of from 220°C to 250°C. This improves the controllability of the opening shape. Further, the glass transition point of the function layer 4 is set to be room temperature or higher. This facilitates the handling of the adhesive label 1.

Further, the pressure-sensitive adhesive layer 3 to be exposed through the opening 13 needs to be brought into and maintained in contact with the adherend 12. Therefore, the diameter of the opening 13 is set to be 40 µm or more. When the diameter of the opening 13 is less than 40 µm, the pressure-sensitive adhesive strength between the pressure-sensitive adhesive layer 3 and the adherend 12 is reduced, which is unsuitable for most practical uses. It is preferred that the thickness of the pressure-sensitive adhesive layer 3 be set to be 20 µm to 300 µm. When the pressure-sensitive adhesive layer 3 is formed to have a thickness of less than 20 µm, the pressure-sensitive adhesive layer 3 does not easily come into contact with the surface of the adherend 12 through the opening 13, and sufficient adhesive strength cannot usually be ensured. When the thickness of the pressure-sensitive adhesive layer 3 is set to be more than 300 µm, it is difficult to form the pressure-sensitive adhesive layer 3 itself.

Further, it is preferred that the pressure-sensitive adhesive strength with respect to the adherend 12 be set to be 0.3 N/(50 mm width) to 20 N/(50 mm width). Note that, the pressure-sensitive adhesive strength of 0.3 N/(50 mm width) means the following: when the pressure-sensitive adhesive label 1 with a width of 50 mm is adhered to the adherend 12 such as a stainless steel plate, and one end thereof is bent by 180° and pulled toward the other end, a force of 0.3 N is required for peeling off the pressure-sensitive adhesive label 1 from the adherend 12. In the case where the pressure-sensitive adhesive strength is smaller than 0.3 N/(50 mm width), the pressure-sensitive adhesive strength is small, and in the case where the pressure-sensitive adhesive strength is more than 20 N/(50 mm width), the pressure-sensitive adhesive label 1 does not peel off easily from the adherend 12. Both the cases are not practical.

### Prevention of Static Charge

It is preferred that any one or more of the support layer 2, the pressure-sensitive adhesive layer 3, the function layer 4, and the release layer 5 contain an antistatic agent. Containing the antistatic agent can prevent a conveyance failure of the pressure-sensitive adhesive label 1. As the antistatic agent, for example, a glycerol mono fatty acid ester can be used. The antistatic agent is blended in any one or more of the above-mentioned layers or is applied onto the surface thereof. As the application method, for example, an antistatic agent is diluted by a solvent such as water or an alcohol solution, followed by coating with the use of a spray, an immersion, a brush, a roll coater, or the like and thereafter drying. The content amount or the application amount of the antistatic agent is not particularly limited, and can be arbitrarily set as long as the antistatic function can be exerted and the opening 13 can be formed in the function layer 4 by using the thermal head. Containing the antistatic agent can prevent the function layer 4 from being opened by discharge when the pressure-sensitive adhesive label 1 adheres to a hand.

Note that, although the thermal head 15 is used in the first embodiment as the heating means for heating the function layer 4 of the pressure-sensitive adhesive label 1 to be opened, the pressure-sensitive adhesive label 1 according to the present invention is not limited to this heating means. For example, the function layer 4 may be opened by heating by an electromagnetic wave such as a laser or a microwave. Even in the case of using the electromagnetic wave to open the function layer 4, because the release layer 5 is disposed on the uppermost part of the pressure-sensitive adhesive label 1, the paper feeding performance of the pressure-sensitive adhesive label 1 can be improved to suppress the contamination of the label issuing device and the pressure-sensitive adhesive label 1. Further, as the thermal head, a line thermal head or a serial thermal head can be used. Further, a resistor of the heat generating part of the thermal head may be a thin film thermal head or may be a thick film thermal head formed by thick film printing.

As described above, the pressure-sensitive adhesive label 1 according to the present invention uses no release paper. Consequently, an environmental load can be reduced because no release paper is discarded when the pressure-sensitive adhesive label 1 is used. Further, the thickness is reduced because of no release paper, and hence the number of effective pressure-sensitive adhesive labels to be issued per roll can be increased. In addition, a material having small stiffness is used for the support layer 2, and hence, when the function layer 4 is opened and a pressure is applied from the support layer 2 side, the contact area between the pressure-sensitive adhesive layer 3 and the adherend 12 is enlarged so that desired adhesive strength can be ensured. Further, the contact area is maintained for a long period of time, and hence desired pressure-sensitive adhesive strength can be maintained. In addition, the sticking can be prevented by disposing the release layer 5 as the uppermost layer of the pressure-sensitive adhesive label 1, and the pressure-sensitive adhesiveness can be accurately exhibited in a predetermined region of the pressure-sensitive adhesive label 1.

### Second Embodiment

FIG. 4 is a schematic cross-sectional view of a pressure-sensitive adhesive label 1 according to a second embodiment of the present invention. The second embodiment is different from the first embodiment in that the function layer 4 contains an inorganic filler 6, but is the same as the first embodiment in the other configurations. Therefore, the different point is mainly described below. The same portions or portions having the same function are denoted by the same reference symbols.

The pressure-sensitive adhesive label 1 has a structure in which the support layer 2, the pressure-sensitive adhesive layer 3, the function layer 4, and the release layer 5 are laminated in this order, and the inorganic filler 6 is contained in the function layer 4 in a dispersed manner. The inorganic filler 6 is formed from an inorganic material. The inorganic material is higher in heat conductivity than a resin material. For example, the heat conductivity of the polymer material of the function layer 4 may be 0.1 W/(m°C) to 0.5 W/(m°C), but the heat conductivity of the inorganic material may be higher than that by one or more orders of magnitude. Consequently, the heat conductivity of the function layer 4 can be improved, and the temperature of the heating region of the function layer 4 can be quickly raised over the entire thickness. With this, the function layer 4 can be stably opened with high sensitivity, and the position and area of the exposed region of the pressure-sensitive adhesive layer 3 can be controlled with high accuracy. Further, due to the thickness of the opened function layer 4 itself or due to the fact that the periphery of the opening 13 is formed higher than the surface of the function layer 4, the heat generating part and the pressure-sensitive adhesive layer 3 can be prevented from being brought into direct contact with each other, and the paper feeding performance of the pressure-sensitive adhesive label 1 can be ensured. Further, the pressure-sensitive adhesive layer 3 acts to suppress the increase in diameter of the function layer 4 because of its pressure-sensitive adhesive strength, but the pressure-sensitive adhesive strength is reduced along with the increase in temperature of the pressure-sensitive adhesive layer 3. In other words, by dispersing the inorganic filler 6 in the function layer 4 to increase the heat conductivity, the temperature unevenness of the function layer 4 is reduced, and the pressure-sensitive adhesive layer 3 is also heated and the pressure-sensitive adhesive function is reduced, with the result that the force of suppressing the increase in diameter of the function layer 4 is reduced. In this manner, the openings 13 can be more easily formed in the function layer 4.

The function layer 4 contains the inorganic filler 6 at 10 vol% to 90 vol%. When the content ratio is less than 10 vol%, the effect of improving the heat conductivity is low. When the content ratio is more than 90 vol%, the fluctuations in physical property value are large. Note that, the inorganic filler 6 is covered by a resin material, and hence the heat conductivity of the resin material is dominant so that the heat conductivity based on a proportional relationship between the resin material and the inorganic material is not exhibited. The function layer 4 contains the inorganic filler 6 preferably at 20 vol% to 60 vol%. If necessary, the function layer 4 may be added with a material for adjusting the physical property value, such as a plasticizer. The shape of the inorganic filler 6 may be plate-like or spherical. Although not particularly limited, it is more preferred that the inorganic filler 6 have a spherical particle shape rather than a nonspherical particle shape in consideration of the fluctuations in physical property value and the dispersibility.

The kind of the inorganic filler 6 is not particularly limited. As the filler, there may be used one, or a mixture of two or more, of, for example: oxide-based ceramics of alumina, silica, titania, zirconia, magnesia, yttria, zinc oxide, iron oxide, and the like; nitride-based ceramics of silicon nitride, titanium nitride, boron nitride, and the like; ceramics of silicon carbide, calcium carbonate, aluminum sulfate, aluminum hydroxide, potassium titanate, talc, kaolin clay, kaolinite, halloysite, pyrophyllite, montmorillonite, sericite, mica, amesite, bentonite, asbestos, zeolite, calcium silicate, magnesium silicate, diatomaceous earth, silica sand, and the like; and a glass fiber. For example, the boron nitride filler, the silicon carbide filler, and the aluminum nitride filler have heat conductivity that is 5 to 40 times as high as oxide fillers. Further, by adding an oxide filler such as alumina or silica for a resin material, the heat conductivity can be increased by one or more orders of magnitude. The other layer materials and configurations are the same as those in the first embodiment, and hence descriptions thereof are omitted.

### Third Embodiment

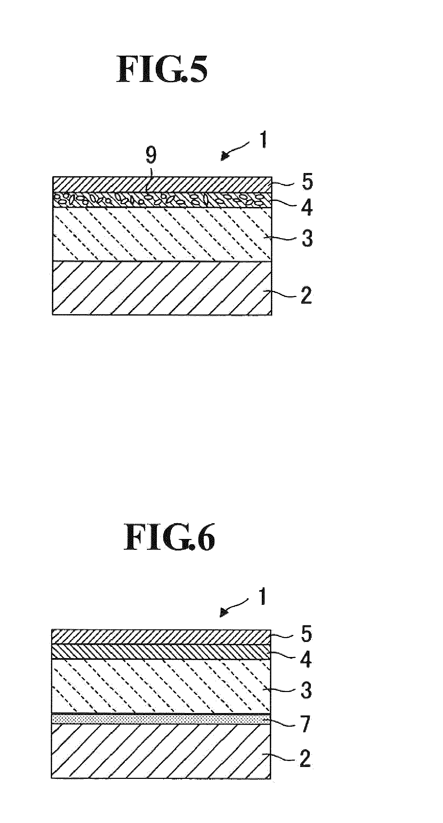

FIG. 5 is a schematic cross-sectional view of a pressure-sensitive adhesive label 1 according to a third embodiment of the present invention. The third embodiment is different from the first embodiment in that the function layer 4 is a porous layer, but is the same as the first embodiment or second embodiment in the other configurations. Therefore, the different point is mainly described below. The same portions or portions having the same function are denoted by the same reference symbols.

The pressure-sensitive adhesive label 1 has a structure in which the support layer 2, the pressure-sensitive adhesive layer 3, the function layer 4, and the release layer 5 are laminated in this order, and the function layer 4 is formed of a porous layer including a large number of air pores 9 (hereinafter referred to as "porous function layer"). The porous function layer is smaller in heat capacity than a function layer made of a non-porous homogeneous material having a uniform thickness. Consequently, the porous function layer can be opened with lower heat energy as compared to a non-porous homogeneous material. By heating, the porous function layer melts to be opened by surface tension. In this case, the porous function layer is smaller in material density than the function layer made of the non-porous homogeneous material. Because a large number of pores are opened in the surface of the porous function layer, the contact area between the porous function layer and the pressure-sensitive adhesive layer 3 is reduced as compared to the non-porous homogeneous material. Thus, the pressure-sensitive adhesive function of the pressure-sensitive adhesive layer 3, which hinders the opening of the porous function layer, is reduced. Further, in the opened porous function layer, a convex part is formed at its periphery part in accordance with the volume of the melted porous material and the opening area. The porous function layer contains a large number of hollow regions inside, and hence no thermal diffusion occurs unlike the non-porous homogeneous material, that is, the thermal isolation is high and the heat is not easily diffused in a plane direction. Thus, the opening does not extend to a region other than the region with which the heat generating part H is brought into contact. As a result, the pressure-sensitive adhesive characteristics of the pressure-sensitive adhesive label 1 can be exhibited with high sensitivity, and the position and shape of the openings 13 can be controlled with high accuracy.

The porous function layer has a cushion property unlike the non-porous homogeneous material. The cushion property of the porous function layer improves the adhesiveness with respect to the thermal head, thereby allowing heat of the heat generating part to be easily transferred to the porous function layer. Consequently, even in the case where the smoothness of the surface of the release layer 5 is poor, the opening sensitivity of the porous function layer can be improved, and desired pressure-sensitive adhesiveness can be exhibited by accurately controlling the positions and shapes of the openings.

It is preferred that the porous function layer have a porosity of 30% to 85% and an average pore diameter of 0.01 µm to 10 µm. The thickness of the porous function layer can be set to be 0.1 µm to 50 µm, preferably 1 µm to 30 µm. Note that, it is preferred to set the average pore diameter of the porous function layer to be smaller than the thickness of the porous function layer so that no through hole may be formed. With this, the heat capacity of the porous function layer can be reduced so as to open the porous function layer with low heat energy. According to the pressure-sensitive adhesive label 1 of the present invention, the heat generating part H and the pressure-sensitive adhesive layer 3 are not easily brought into contact with each other because of the thickness of the opened porous function layer and the convex part formed at the periphery of the opening 13. In addition, the release layer 5 is formed as the uppermost part, and hence, when used in the device, the pressure-sensitive adhesive is prevented from adhering onto the heat generating part H when the pressure-sensitive adhesive label 1 is moved relative to the heat generating part H. Thus, the paper feeding performance of the pressure-sensitive adhesive label 1 can be ensured. Note that, although depending on the material characteristics of the porous layer, the temperature for opening the porous function layer by heating can be set to be about 100°C to 200°C. In this manner, power saving of the device can be realized, and the sensitivity of the pressure-sensitive adhesive label can be enhanced.

When a synthetic resin material is used as the porous function layer, the heat capacity per unit area can be reduced to be smaller than that of the underlying pressure-sensitive adhesive layer 3. In other words, the heat capacity of the upper porous function layer becomes smaller than the heat capacity of the lower pressure-sensitive adhesive layer 3, and hence the rise in temperature of the lower pressure-sensitive adhesive layer 3 can be suppressed to prevent the pressure-sensitive adhesive layer 3 from being deformed or denatured due to heat.

The porous function layer can be formed by a stretching process, or by, for example, mixing and dispersing vaporizable particles in a material serving as a base and then vaporizing the particles. As the base, an olefin-based resin can be used, which has been described above in the first embodiment. The other layer materials and configurations are the same as those in the first or second embodiment, and hence descriptions thereof are omitted.

### Fourth Embodiment

FIG. 6 is a schematic cross-sectional view of a pressure-sensitive adhesive label 1 according to a fourth embodiment of the present invention. The fourth embodiment is different from the first embodiment in that a buffer member 7 is provided between the support layer 2 and the pressure-sensitive adhesive layer 3, but is the same as the first to third embodiments in the other configurations. Therefore, the different point is mainly described below. The same portions or portions having the same function are denoted by the same reference symbols.

As illustrated in FIG. 6, the pressure-sensitive adhesive label 1 has a laminated structure including the support layer 2, the pressure-sensitive adhesive layer 3, the function layer 4, and the release layer 5, and the buffer member 7 is provided between the support layer 2 and the pressure-sensitive adhesive layer 3. By disposing the buffer member 7, the stiffness of the support layer 2 is reduced to weaken the force of peeling off the pressure-sensitive adhesive layer 3 from the surface of the adherend. As a result, the contact area between the pressure-sensitive adhesive layer 3 and the adherend is maintained, and predetermined pressure-sensitive adhesive strength is sustained. As the buffer member 7, a material having a cushion property such as a non-woven fabric material can be used. The other layer materials and configurations are the same as those in the first, second, or third embodiment, and hence descriptions thereof are omitted.

### Fifth Embodiment

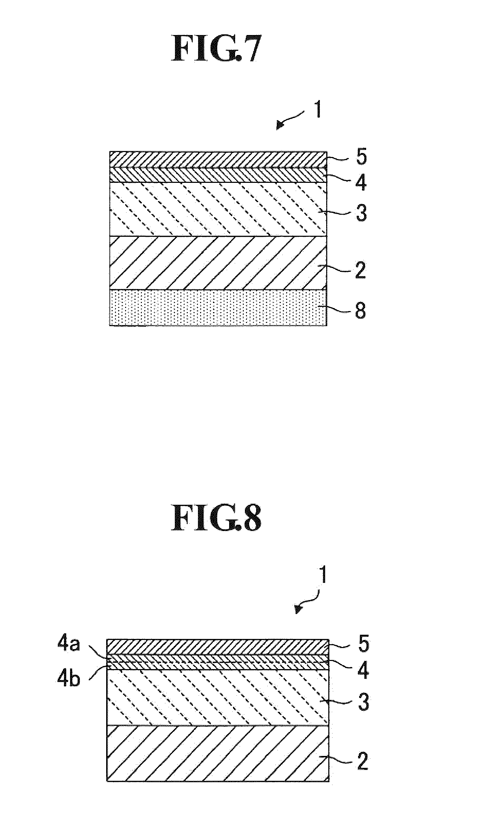

FIG. 7 is a schematic cross-sectional view of a pressure-sensitive adhesive label 1 according to a fifth embodiment of the present invention. The fifth embodiment is different from the first embodiment in that a thermosensitive color-developing layer 8 is disposed on a side of the support layer 2 opposite to the pressure-sensitive adhesive layer 3, but is the same as the first to fourth embodiments in the other configurations. Therefore, the different point is mainly described below. The same portions or portions having the same function are denoted by the same reference symbols.

As illustrated in FIG. 7, the pressure-sensitive adhesive label 1 has a laminated structure including the support layer 2, the pressure-sensitive adhesive layer 3, the function layer 4, and the release layer 5, and the thermosensitive color-developing layer 8 is disposed on a side of the support layer 2 opposite to the pressure-sensitive adhesive layer 3. As the thermosensitive color-developing layer 8, a thermosensitive color-developing layer that develops color by heating can be used. For example, the thermosensitive color-developing layer 8 can be formed in a manner that a thermosensitive recording layer coating liquid is prepared by mixing a leuco dye and a developer for developing the leuco dye, and the thermosensitive color-developing layer 8 is coated with the thermosensitive recording layer coating liquid. Alternatively, instead of the thermosensitive color-developing layer 8, a recording layer that is recordable by an inkjet recording apparatus may be used. In this manner, a character and graphic can be recorded on the pressure-sensitive adhesive label 1. The other layer materials and configurations are the same as those in the first, second, third, or fourth embodiment, and hence descriptions thereof are omitted.

### Sixth Embodiment

FIG. 8 is a schematic cross-sectional view of a pressure-sensitive adhesive label 1 according to a sixth embodiment of the present invention. The sixth embodiment is different from the first to fifth embodiments in that the function layer 4 is made up of a double-layered thermoplastic resin, but is the same as the first embodiment in the other configurations. Therefore, the different point is mainly described below. The same parts or parts having the same function are denoted by the same reference symbols.

As illustrated in FIG. 8, the function layer 4 has a structure in which a first thermoplastic resin 4a and a second thermoplastic resin 4b that are incompatible with each other are laminated. Those incompatible first thermoplastic resin 4a and second thermoplastic resin 4b are subjected to co-extrusion to form the function layer 4. The adhesive strength between layers of the first thermoplastic resin 4a and the second thermoplastic resin 4b can be set to be 0.05 g/cm to 5 g/cm, and the thickness fluctuations can be set to be 10% or less as whole. Further, the surface of the function layer 4 can be set to have a center-line average roughness (Ra) of 0.05 µm to 0.1 µm and a maximum roughness (Rmax) of 1.0 µm or less. As a result, the release properties and the slippage properties of the release layer 5 disposed on top of the function layer 4 are further improved, and hence the pressure-sensitive adhesive label 1 can be easily pulled out of the roll to prevent the sticking between the pressure-sensitive adhesive label 1 and the heat generating part of the thermal head and the contamination of the device.

For example, as any one of the first and second thermoplastic resins 4a and 4b, polyester may be used, and as the other resin, polyolefin may be used. The polyester is a liner polyester formed of a dicarboxylic acid component and a glycol component, and examples of the dicarboxylic acid component may include terephthalic acid, isophthalic acid, phthalic acid, naphthalenedicarboxylic acid, diphenyldicarboxylic acid, and diphenyl ether dicarboxylic acid. In addition, examples of the glycol component may include ethylene glycol, 1,3-propylene glycol, 1,4-butanediol, 1,5-pentanediol, 1,6-hexanediol, 1,4-cyclohexanedimethanol, diethylene glycol, and neopentyl glycol. Preferred examples of the polyester include polyethylene terephthalate, polyethylene-2,6-naphthalene dicarboxylate, and polybutylene terephthalate.

A representative example of the polyolefin is polypropylene in particular, and copolymerized polypropylene is preferred in terms of stretchability. The copolymerized polypropylene is typically an ethylene copolymer, and a random copolymer or a block copolymer can be used. However, the random copolymer is preferred in terms of surface properties of the release surface. If necessary, an antioxidant, an antistatic agent, a colorant, a plasticizer, another resin, or the like can be added. The other layer materials and configurations can be the same as those in the first to fifth embodiments.

### Label Issuing Device

A label issuing device of the present invention includes: a conveying part for conveying a pressure-sensitive adhesive label, the pressure-sensitive adhesive label including: a support layer; a pressure-sensitive adhesive layer disposed on the support layer; a function layer disposed on the pressure-sensitive adhesive layer, and a release layer disposed on the function layer; a heat generating part for heating the function layer to form an opening to expose the pressure-sensitive adhesive layer; and a control part for controlling the conveying part and the heat generating part. Note that, the pressure-sensitive adhesive label may include an indication layer provided on a side of the support layer opposite to the pressure-sensitive adhesive layer, or the support layer may serve as an indication layer.

The label issuing device of the present invention can set a pressure-sensitive adhesive region and a non-pressure-sensitive adhesive region immediately before the use of the pressure-sensitive adhesive label in accordance with the purpose of use without using a large-scale production device. Further, the number, positions, and aperture ratio of openings to be formed in the pressure-sensitive adhesive region can be changed in accordance with the properties of an adherend and the use environment of the pressure-sensitive adhesive label. In addition, release paper is not required to be used, and the pressure-sensitive adhesive label can be reduced in thickness due to the absence of release paper so that the number of issuance of effective pressure-sensitive adhesive labels per roll can be increased. Further, an environmental load can be reduced due to the absence of release paper. In addition, by providing the release layer as the uppermost layer of the pressure-sensitive adhesive label, the pressure-sensitive adhesive label can be prevented from adhering onto the heat generating part, that is, the sticking can be prevented, and hence the pressure-sensitive adhesive region can be accurately formed at an intended position of the pressure-sensitive adhesive label. Besides, the contamination of the label issuing device caused by the adhesion of the pressure-sensitive adhesive label onto the device can also be prevented.

Specific description is made. As the heat generating part, a thermal head or laser light can be used. When the thermal head is used, a large number of heat generating parts can be arranged in a row, and hence, a large number of openings can be formed in the function layer simultaneously in a row. The control part selects opening pattern information stored in advance and causes the heat generating part to generate heat to form a pressure-sensitive adhesive region including a plurality of openings in the function layer. The control part controls the conveying part to convey the pressure-sensitive adhesive label 1 by a predetermined amount and causes the heat generating part to generate heat. By repeating this process, a predetermined opening pattern in which the pressure-sensitive adhesive layer is exposed is formed in the pressure-sensitive adhesive label.

An opening diameter of the opening can be controlled in accordance with the heat quantity applied by the heat generating part. That is, in order to decrease an opening diameter, the heat quantity applied from the heat generating part to the function layer is suppressed, and in order to increase an opening diameter, the heat quantity is increased. That is, the control part can control an opening diameter of the opening by controlling power supplied to the heat generating part and heating time for heating the function layer. The pattern information of the opening is stored in advance, and the control part controls the heat generating part and the conveying part based on the pattern information of a selected opening pattern to form a pressure-sensitive adhesive region formed of the pattern of the opening in the pressure-sensitive adhesive label. For example, an opening pattern in which a plurality of openings are arranged in vertical and horizontal directions, an opening pattern in which openings are arranged in a zigzag shape, an opening pattern in which openings are arranged in a honeycomb shape, or an opening pattern including a plurality of different openings can be selected to be formed. Seventh and eighth embodiments of the present invention are described in detail below.

### Seventh Embodiment

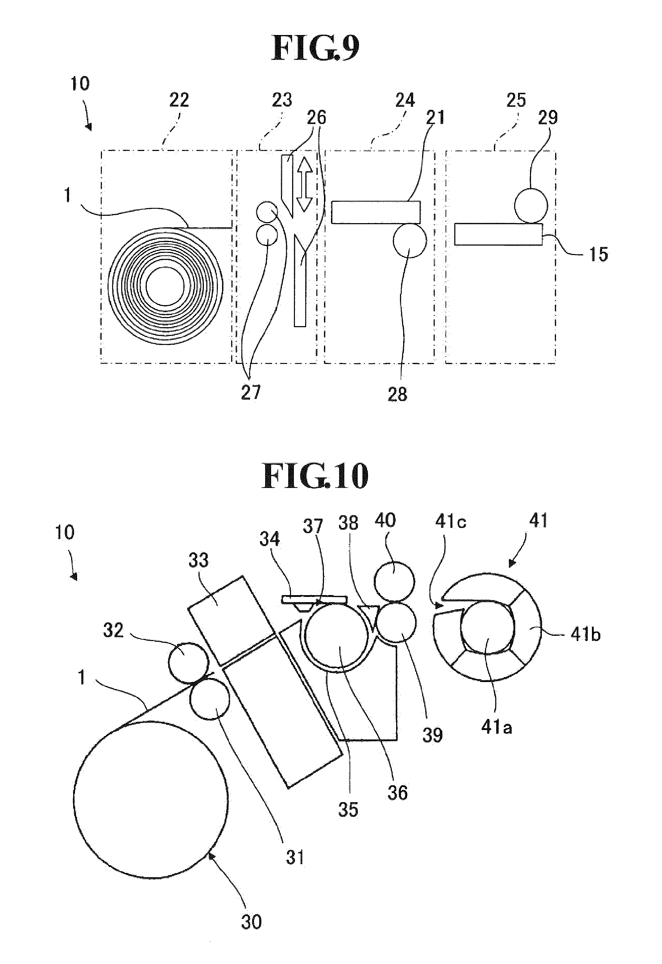

FIG. 9 is a schematic structural view of a label issuing device 10 according to the seventh embodiment of the present invention. The label issuing device 10 includes a roll sheet accommodating part 22 for accommodating the pressure-sensitive adhesive label 1, a roll sheet cutting part 23 for cutting the pressure-sensitive adhesive label 1, a label recording part 24 as a recording part for performing recording on the pressure-sensitive adhesive label 1, and a pressure-sensitive adhesiveness exhibiting part 25 for causing the pressure-sensitive adhesive label 1 to exhibit pressure-sensitive adhesiveness. The roll sheet accommodating part 22 accommodates the pressure-sensitive adhesive label 1 rolled into a roll shape. As illustrated in FIG. 7, the pressure-sensitive adhesive label 1 has a laminated structure including the support layer 2, a thermosensitive color-developing layer 8 provided on the lower surface of the support layer 2, the pressure-sensitive adhesive layer 3 provided on the upper surface of the support layer 2, the function layer 4 provided on a surface of the pressure-sensitive adhesive layer 3, and the release layer 5 disposed on the surface of the function layer 4. The roll sheet cutting part 23 cuts the pressure-sensitive adhesive label 1 sent from conveying rollers 27 as the conveying part to a predetermined length by a cutter member 26. The label recording part 24 performs recording by a recording thermal head 21 on the thermosensitive color-developing layer 8 of the pressure-sensitive adhesive label 1 placed on a conveying roller 28. As already described in the first to fifth embodiment, the pressure-sensitive adhesiveness exhibiting part 25 heats and opens the function layer 4 of the pressure-sensitive adhesive label 1, which is sandwiched between a conveying roller 29 as the conveying part and the thermal head 15, with the thermal head 15 as the heat generating part to expose the pressure-sensitive adhesive layer 3 through the opening 13.

Here, the thermal head 15 is provided with the heat generating part in which a plurality of heat generating bodies are arranged in parallel, and thus, can form the pressure-sensitive adhesive region in which a plurality of openings 13 are opened in parallel simultaneously. It is preferred that a heat-concentration type head be used as the heat generating part. The heat generating surface of the heat generating part may have any shape such as a rectangle, a circle, an oval, a heart-like shape, or other shapes. A plurality of heat generating bodies can be formed at an arrangement density of 100 dpi to 600 dpi.

The label issuing device 10 can form the pressure-sensitive adhesive region including a plurality of openings 13 in a conveying direction of the pressure-sensitive adhesive label 1 by using the control part (not shown) to control the heat generating part and the conveying part. That is, the label issuing device 10 can form a required number of openings 13 at positions required in the pressure-sensitive adhesive label 1. In this manner, it is possible to control the position and size of the pressure-sensitive adhesive region in which pressure-sensitive adhesiveness of the pressure-sensitive adhesive label 1 is to be exhibited.

### Eighth Embodiment

FIG. 10 is a schematic structural view of a label issuing device 10 according to an eighth embodiment of the present invention. The eighth embodiment is different from the seventh embodiment in that one thermal head 34 forms the opening 13 in the function layer 4, and records a character and the like on the thermosensitive color-developing layer 8. The same parts or parts having the same functions are denoted by the same reference symbols.

The label issuing device 10 includes a roll accommodating unit 30 for accommodating the pressure-sensitive adhesive label 1 rolled into a roll shape, a cutter unit 33 for cutting the pressure-sensitive adhesive label 1, the thermal head 34 as the heat generating part for performing recording on the thermosensitive color-developing layer 8 of the pressure-sensitive adhesive label 1 and forming the opening 13 in the function layer 4, a platen roller 36 for holding the pressure-sensitive adhesive label 1 at a time of recording by the thermal head 34 or forming of the openings 13, a roll-up device 41 for rolling up the pressure-sensitive adhesive label 1 onto a roll-up roller 41a and retaining the pressure-sensitive adhesive label 1 temporarily, conveying rollers 31, 39 and driven rollers 32, 40 as the conveying part for conveying the pressure-sensitive adhesive label 1, a conveying direction regulating unit 38 for regulating a conveying direction of the pressure-sensitive adhesive label 1, and a control part (not shown) for controlling energy imparted to the thermal head 34 and controlling the rotation of the conveying rollers 31, 39 and the platen roller 36.

The label issuing device 10 is operated as follows. The control part drives the conveying roller 31 and the driven roller 32 to pull out the rolled-up pressure-sensitive adhesive label 1 in the roll accommodating unit 30. The control part further delivers the pressure-sensitive adhesive label 1 having passed through the cutter unit 33 from a delivery path 37 and rotates the platen roller 36 in a clockwise direction so that the pressure-sensitive adhesive label 1 is sandwiched between the platen roller 36 and the thermal head 34. The control part further causes the heat generating part of the thermal head 34 to generate heat and record printing information on the thermosensitive color-developing layer 8 of the pressure-sensitive adhesive label 1. The control part rotates the conveying roller 39 and the roll-up roller 41a to guide the pressure-sensitive adhesive label 1, with the thermosensitive color-developing layer 8 having been recorded on, from an insertion port 41c into the roll-up device 41, and rolls up the pressure-sensitive adhesive label 1 while pressing the pressure-sensitive adhesive label 1 onto the roll-up roller 41a with a guide 41b. The control part operates the cutter unit 33 to cut the pressure-sensitive adhesive label 1, to thus complete a recording operation.

Next, the control part rotates the conveying roller 39 to convey the cut portion of the pressure-sensitive adhesive label 1 to the position of the conveying roller 39 and the driven roller 40. Next, the control part drives the conveying direction regulating unit 38 to rotate the conveying roller 39 in a reverse direction and rotate the platen roller 36 in a clockwise direction, and inverts the pressure-sensitive adhesive label 1 through a conveying path 35 to sandwich the pressure-sensitive adhesive label 1 between the thermal head 34 and the platen roller 36. The control part causes the heat generating part of the thermal head 34 to generate heat based on the selected pattern information and forms a predetermined pressure-sensitive adhesive region including a plurality of openings 13 in the function layer 4 of the pressure-sensitive adhesive label 1. The pressure-sensitive adhesive label 1 in which the pressure-sensitive adhesive region is formed is pulled out from the position of the conveying direction regulating unit 38 to the outside.

The shape and the like of the pressure-sensitive adhesive region can be formed by selecting an opening pattern in which the plurality of openings 13 are arranged in vertical and horizontal directions, an opening pattern in which the openings 13 are arranged in a zigzag shape, an opening pattern in which the openings 13 are arranged in a honeycomb shape, an opening pattern including a plurality of different openings 13, or other such opening pattern. Thus, the pressure-sensitive adhesive region and the non-pressure-sensitive adhesive region can be set immediately before the use of the pressure-sensitive adhesive label 1 in accordance with the purpose of use, and further, the number, positions, and aperture ratio of the openings 13 to be formed in the pressure-sensitive adhesive region can be changed in accordance with the properties of the adherend 12 and the use environment of the pressure-sensitive adhesive label 1.

The foregoing description has been given by way of example only and it will be appreciated by a person skilled in the art that modifications can be made without departing from the scope of the present invention.

## Claims

1. A pressure-sensitive adhesive label (1) including:
a support layer (2);
a pressure-sensitive adhesive layer (3) disposed on the support layer;
a function layer (4) disposed on the pressure-sensitive adhesive layer; and
a release layer (5) disposed on the function layer,
wherein the function layer is configured to be opened by heating to expose the pressure-sensitive adhesive layer.

2. A pressure-sensitive adhesive label including according to claim 1, wherein the release layer includes a silicone compound

3. A pressure-sensitive adhesive label including according to claim 2, wherein the release layer includes a silane coupling agent.

4. A pressure-sensitive adhesive label including according to claim 1, wherein the release layer includes a fluorine-based compound.

5. A pressure-sensitive adhesive label including according to any one of the preceding claims, wherein the release layer has a thickness of from 0.005 µm to 3 µm.

6. A pressure-sensitive adhesive label including according to any one of the preceding claims, wherein at least one of the support layer, the pressure-sensitive adhesive layer, the function layer, and the release layer includes an antistatic agent.

7. A pressure-sensitive adhesive label including according to any one of the preceding claims, wherein the function layer is formed of an olefin-based resin.

8. A pressure-sensitive adhesive label including according to any one of the preceding claims, wherein the function layer has an average thickness of from 0.1 µm to 10 µm.

9. A pressure-sensitive adhesive label including according to any one of the preceding claims, wherein the function layer has a melting point of from 50°C to 280°C.

10. A pressure-sensitive adhesive label including according to any one of the preceding claims, wherein the function layer includes an inorganic filler (9).

11. A pressure-sensitive adhesive label including according to any one of the preceding claims, wherein the function layer is formed of a porous layer.

12. A pressure-sensitive adhesive label including according to claim 11, wherein the porous layer has a void content of from 30% to 85%.

13. A pressure-sensitive adhesive label including according to any one of the preceding claims, wherein the function layer is formed by laminating a first thermoplastic resin (4a) and a second thermoplastic resin (4b), which are incompatible to each other.

14. A pressure-sensitive adhesive label including according to claim 13, wherein the surface of the release layer has a center line average roughness of from 0.05 µm to 0.1 µm

15. A pressure-sensitive adhesive label including according to any one of the preceding claims, wherein the opening formed by heating the function layer has a diameter of 40 µm or more.

16. A pressure-sensitive adhesive label including according to any one of the preceding claims, wherein the pressure-sensitive adhesive layer has a thickness of from 20 µm to 300 µm.

17. A pressure-sensitive adhesive label including according to any one of the preceding claims, wherein the support layer (2) and the pressure-sensitive adhesive layer (3) include a buffer (7) member therebetween.

18. A pressure-sensitive adhesive label including according to any one of the preceding claims, wherein the support layer is formed of paper or a polyolefin-based polymer.

19. A pressure-sensitive adhesive label including according to claim 18, wherein the paper includes any one of glassine paper, high-quality paper, art paper, design paper, Japanese paper, a non-woven fabric, and a synthetic resin.

20. A pressure-sensitive adhesive label including according to any one of the preceding claims, wherein the support layer serves as an indication layer.

21. A pressure-sensitive adhesive label including according to any one of claims 1 to 19, wherein the pressure-sensitive adhesive label further includes a thermosensitive color-developing layer (8) disposed on a side of the support layer (2) opposite to the pressure-sensitive adhesive layer (3).

22. A pressure-sensitive adhesive label including according to any one of the preceding claims, wherein the pressure-sensitive adhesive label has pressure-sensitive adhesive strength with respect to an adherend of 0.3 N/(50 mm width) to 20 N/(50 mm width).

23. A label issuing device (10) including:
a conveying part for conveying a pressure-sensitive adhesive label according to any one of the preceding claims,
a heat generating part (15, 34) for heating the function layer to form an opening to expose the pressure-sensitive adhesive layer; and
a control part for controlling the conveying part and the heat generating part.

24. A label issuing device according to claim 23, wherein
the pressure-sensitive adhesive label further includes one of an indication layer provided on a side of the support layer opposite to the pressure-sensitive adhesive layer, and
the heat generating part (21, 34) is configured to heat the indication layer to perform recording.

25. A label issuing device according to claim 23, wherein
the support layer functions as an indication layer, and
the heat generating part (21, 34) is configured to heat the indication layer to perform recording.
